# EUROPÄISCHE PATENTSCHRIFT

(11) **EP 3 974 711 B1**
(45) Veröffentlichungstag und Bekanntmachung des Hinweises auf die Patenterteilung: **07.01.2026**
(21) Anmeldenummer: 20198130.5
(22) Anmeldetag: 24.09.2020
(51) Int. Cl.: F21S 41/20, F21S 41/55, F21S 45/50, B60R 13/04

(54) **KRAFTFAHRZEUGSCHEINWERFER**
MOTOR VEHICLE HEADLAMP
PHARES DE VÉHICULE AUTOMOBILE

(43) Veröffentlichungstag der Anmeldung: 30.03.2022
(73) Patentinhaber: ZKW Group GmbH, 3250 Wieselburg (AT)
(72) Erfinder: Hellinger, Roland, 8250 Vorau (AT); Pils, Christoph, 3251 Purgstall (AT); Unger, Stefan, 3390 Melk (AT)
(74) Vertreter: Patentanwaltskanzlei Matschnig & Forsthuber OG

(56) Entgegenhaltungen:
- EP-A1- 3 882 516
- WO-A1-2015/044568
- WO-A1-2016/000866
- CN-A- 108 082 066
- CN-U- 209 336 583
- DE-A1- 102011 119 379
- FR-A- 1 143 355
- FR-A1- 2 826 626
- FR-A1- 2 917 348
- US-A1- 2015 204 500

## Beschreibung

Die Erfindung betrifft einen Kraftfahrzeugscheinwerfer gemäß Anspruch 1.

Im Stand der Technik sind Kraftfahrzeugscheinwerfer mit Abschlussscheiben bekannt. Es ist auch bekannt, Blenden, beispielsweise Zierblenden, an der Abschlussscheibe eines Kraftfahrzeugscheinwerfers zu befestigen. Üblicherweise werden diese von außen an die Abschlussscheibe geklebt oder geklippt. Klebeverbindungen weisen jedoch eine sehr beschränkte Lebensdauer auf, insbesondere durch die klimatischen Einflüsse die auf den Klebstoff einwirken. Klipp- oder Steckverbindungen zwischen der Abschlussscheibe und der Blende weisen ebenfalls nicht die nötige Zuverlässigkeit auf. WO 2016/000866 A1 und FR 1 143 355 A zeigen Kraftfahrzeugscheinwerfer gemäß dem Stand der Technik. WO 2016/000866 A1 offenbart einen Kraftfahrzeugscheinwerfer mit einem Anbauteil, wobei die Abschlussscheibe ein Befestigungsdom, in welchen eine Schraube von außen und durch das Anbauteil hindurch, eingeschraubt wird. Zwischen dem Anbauteil und der Abschlussscheibe ist, an dem Befestigungsdom, ein gummielastisches kappenartiges Element angebracht, durch welches die Langzeitstabilität des Montageverbunds, bestehend aus der Abschlussscheibe und dem Anbauteil, verbessert wird.

Die Aufgabe der vorliegenden Erfindung besteht darin, die Nachteile des Standes der Technik zu lindern bzw. zu beseitigen. Die Erfindung setzt sich daher insbesondere zum Ziel, einen Kraftfahrzeugscheinwerfer zu schaffen, bei welchem die Befestigung einer Blende verbessert wird.

Diese Aufgabe wird durch einen Kraftfahrzeugscheinwerfer mit den Merkmalen von Anspruch 1 gelöst. Bevorzugte Ausführungen sind in den abhängigen Ansprüchen angegeben.

Erfindungsgemäß ist das Blendenelement an der Außenseite des intransparenten Bereichs der Abschlussscheibe angeordnet und an dieser mittels zumindest einer Schraube befestigt, wobei die Abschlussscheibe zur Befestigung des Blendenelements zumindest eine Befestigungsöffnung zur Aufnahme der Schraube aufweist, wobei der Durchmesser der Befestigungsöffnung größer als der Gewindedurchmesser der Schraube ist, wobei die Schraube einen Schraubkopf und einen Gewindeabschnitt aufweist, wobei im befestigten Zustand des Blendenelements an der Abschlussscheibe der Schraubkopf an der Innenseite der Abschlussscheibe anliegt und der Gewindeabschnitt zumindest teilweise durch die Befestigungsöffnung ragt und in eine Befestigungsausnehmung des Blendenelements, welche an der Rückseite des Blendenelements angeordnet ist, eingreift, wobei durch das Anliegen des Schraubkopfs an der Innenseite der Abschlussscheibe und durch den Eingriff des Gewindeabschnitts der Schraube in die Befestigungsausnehmung die Position des Blendenelement an der Außenseite der Abschlussscheibe in zumindest zwei Richtungen, welche parallel und orthogonal zu der Schraubachse der Schraube orientiert sind, fixiert ist.

Dadurch ergibt sich der Vorteil, dass das Blendenelement von innen an der Abschlussscheibe, insbesondere an dem intransparenten Bereich der Abschlussscheibe, befestigt ist, wobei dadurch die klimatischen Einflüsse auf die Schraube minimiert werden. Die Schraube ist insbesondere nicht an der Außenseite der Abschlussscheibe bzw. an der Vorderseite des Blendenelements befestigt und ist somit nicht sichtbar für einen Betrachter des Kraftfahrzeugscheinwerfers. Durch die Befestigung des Blendenelements an dem intransparenten Bereich von innen, sind die Befestigungsmittel (Schraube, Befestigungsausnehmung, Befestigungsöffnung) von außen nicht erkennbar. Dadurch wird insbesondere die äußere Wirkung des Blendenelements nicht durch die Befestigungsmittel beeinträchtigt. Die Abschlussscheibe kann als 2K-Spritzgussteil ausgebildet sein. Der Gewindeabschnitt der Schraube ist vorzugsweise in die Befestigungsausnehmung des Blendenelements geschraubt und die dem Blendenelement zugewandte Fläche des Schaubkopfs kontaktiert die Innenseite der Abschlussscheibe, insbesondere einen Bereich um die Befestigungsöffnung herum.

Der intransparente Bereich der Abschlussscheibe weist an seiner Außenseite einen Aufnahmebereich auf und das Blendenelement weist ein zu dem Aufnahmebereich korrespondierendes Kontaktelement auf, welches im befestigten Zustand des Blendenelements den Aufnahmebereich kontaktiert. Der Aufnahmebereich kann als Aufnahmeelement ausgebildet sein, wobei der Aufnahmebereich bzw. das Aufnahmeelement dazu eingerichtet ist, das Kontaktelement des Blendenelements im befestigten Zustand des Blendenelements zu kontaktieren.

Es ist vorgesehen, dass der Aufnahmebereich als Vertiefung oder Erhöhung, welche die Form einer geschlossenen Kurve aufweist, ausgebildet ist.

Es kann vorgesehen sein, dass das Kontaktelement als eine zu dem Aufnahmebereich korrespondierend ausgebildete Vertiefung oder Erhöhung, welche vorzugsweise die Form einer geschlossenen Kurve aufweist, ausgebildet ist.

Es kann vorgesehen sein, dass der Aufnahmebereich um die Befestigungsöffnung herum verläuft.

Es kann vorgesehen sein, dass das Kontaktelement um die Befestigungsausnehmung herum verläuft.

Es kann vorgesehen sein, dass die Abschlussscheibe zumindest zwei Befestigungsöffnungen und das Blendenelement zumindest zwei Befestigungsausnehmungen aufweist, wobei vorzugsweise der Aufnahmebereich um die zumindest zwei Befestigungsöffnungen und das Kontaktelement um die zumindest zwei Befestigungsausnehmungen herum verläuft. Dadurch ergibt sich der Vorteil, dass die Befestigung des Blendenelements an der Abschlussscheibe besonders stabil und zuverlässig ist. Vorzugsweise ist eine erste der zumindest zwei Befestigungsöffnungen dem Aufnahmebereich näher als einer zweiten Befestigungsöffnung. Umgekehrt ist vorzugsweise die zweite der zumindest zwei Befestigungsöffnungen dem Aufnahmebereich näher als der ersten Befestigungsöffnung.

Es kann vorgesehen sein, dass der Aufnahmebereich und das Kontaktelement rund oder oval ausgebildet sind.

Es kann vorgesehen sein, dass die Befestigungsausnehmung ein zu dem Gewinde der Schraube korrespondierend ausgebildetes Gegengewinde aufweist.

Es kann vorgesehen sein, dass das Blendenelement in einer ersten Richtung, welche parallel zu der Schraubachse orientiert ist, eine Dicke D aufweist und die Befestigungsausnehmung in der ersten Richtung eine Tiefe H aufweist, wobei die Tiefe H geringer ist als die Dicke D. Dadurch ergibt sich der Vorteil, dass die Schraube an der Vorderseite des Blendenelements nicht sichtbar ist. Die Vorderseite des Blendenelements ist insbesondere frei von der Befestigungsausnehmung und der Schraube bzw. ist an der Vorderseite des Blendenelements keine Befestigungsausnehmung und keine Schraube, wobei sich dadurch der Vorteil ergibt, dass eine (optische oder dekorative) Funktion des Blendenelements an der Vorderseite nicht durch die Befestigungsausnehmung oder die Schraube beeinflusst wird.

Es kann vorgesehen sein, dass die Befestigungsöffnung im Wesentlichen zylinderförmig ausgestaltet ist.

Es kann vorgesehen sein, dass an der Außenseite der Abschlussscheibe, zwischen der Abschlussscheibe und dem Blendenelement ein erstes Dichtungselement angeordnet ist. Damit kann ein Eindringen von Feuchtigkeit in das Innere des Kraftfahrzeugscheinwerfers verhindert werden.

Es kann vorgesehen sein, dass das erste Dichtungselement an dem Aufnahmebereich und/oder an dem Kontaktelement angeordnet ist.

Es kann vorgesehen sein, dass an der Innenseite der Abschlussscheibe, zwischen der Abschlussscheibe und dem Schraubkopf ein zweites Dichtungselement angeordnet ist.

Es kann vorgesehen sein, dass die Außenseite des intransparenten Bereichs der Abschussscheibe einen ersten Flächeninhalt und die Vorderseite des Blendenelements einen zweiten Flächeninhalt aufweist, wobei der erste Flächeninhalt größer oder gleich dem zweiten Flächeninhalt ist.

Es kann vorgesehen sein, dass der intransparente Bereich unterhalb des transparenten Bereichs angeordnet ist.

Es kann vorgesehen sein, dass der intransparente und der transparente Bereich einteilig ausgebildet ist.

Es kann vorgesehen sein, dass der intransparente und der transparente Bereich als 2-Komponenten-Spritzgussbauteil ausgebildet ist.

Im Rahmen dieser Beschreibung sind die Begriffe "oben", "unten", "horizontal", "vertikal" als Angaben der Ausrichtung zu verstehen, wenn der Kraftfahrzeugscheinwerfer in normaler Benutzungsstellung angeordnet ist, nachdem er in einem im Kraftfahrzeug eingebaut wurde.

Die Erfindung wird nachstehend anhand eines bevorzugten Ausführungsbeispiels, auf das sie jedoch nicht beschränkt sein soll, noch weiter erläutert. In den Zeichnungen zeigt:
Fig. 1 eine Vorderansicht eines erfindungsgemäßen Kraftfahrzeugscheinwerfer;
Fig. 2 eine Rückansicht einer Abschlussscheibe;
Fig. 3 eine Detailansicht der Abschlussscheibe;
Fig. 4 eine Detailansicht eines Blendenelements; und
Fig. 5 eine weitere Detailansicht der Abschlussscheibe ohne einem Blendenelement.

Zur Vereinfachung werden für die Erfindung nicht wesentliche Elemente in den Figuren nicht gezeigt.

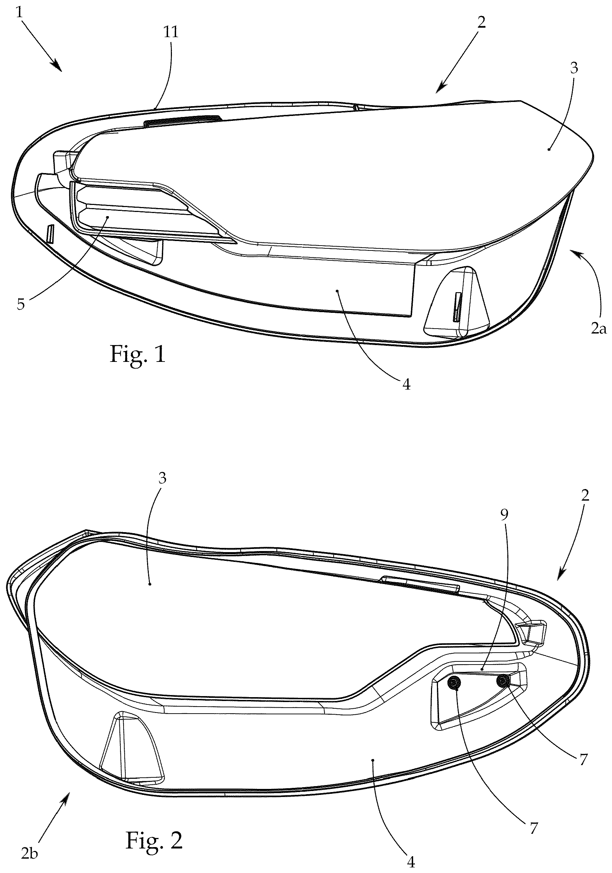

Fig. 1 zeigt eine Vorderansicht eines Kraftfahrzeugscheinwerfers 1 mit einer (nicht gezeigten) Beleuchtungsvorrichtung zur Erzeugung und Abstrahlung von Licht und mit einem Gehäuse, welches einen (nicht gezeigten) Gehäusekörper 11 aufweist, wobei in dem Gehäusekörper 11 die Beleuchtungsvorrichtung angeordnet ist.

Der Gehäusekörper 11 hat eine ihn abschließende Abschlussscheibe 2, wobei die Abschlussscheibe 2 einen transparenten Bereich 3 und einen intransparenten Bereich 4 aufweist. Die Beleuchtungsvorrichtung ist in dem Gehäusekörper 11 dergestalt angeordnet, dass mittels der Beleuchtungsvorrichtung Licht durch den transparenten Bereich 3 der Abschlussscheibe 2 hindurch in einen Verkehrsraum abstrahlbar ist, wobei die Abschlussscheibe 2 eine dem Gehäusekörper 11 zugewandte Innenseite 2b und eine dem Gehäusekörper 11 abgewandte Außenseite 2a aufweist.

In Fig. 1 ist die Außenseite 2a und in Fig. 2 ist die Innenseite 2b der Abschlussscheibe 2 gezeigt.

An der Außenseite 2b der Abschlussscheibe 2 ist ein Blendenelement 5 befestigt, wobei das Blendenelement 5 am intransparenten Bereich 4 der Abschlussscheibe 2 befestigt ist. Das Blendenelement 5 weist eine der Abschlussscheibe 2 zugewandte Rückseite 5b und eine der Abschlussscheibe 2 abgewandte Vorderseite 5a auf.

Das Blendenelement 5 ist an der Außenseite 2a des intransparenten Bereichs 4 der Abschlussscheibe 2 angeordnet und an dieser mittels zumindest einer Schraube 6 befestigt. Die Abschlussscheibe 2 weist zur Befestigung des Blendenelements 5 zumindest eine Befestigungsöffnung 7 zur Aufnahme der Schraube 6 auf, wobei der Durchmesser der Befestigungsöffnung 7 größer als der Gewindedurchmesser der Schraube 6 ist. Die Schraube 6 hat einen Schraubkopf und einen Gewindeabschnitt, wobei im befestigten Zustand des Blendenelements 5 an der Abschlussscheibe 2 der Schraubkopf an der Innenseite 2a der Abschlussscheibe 2 anliegt und der Gewindeabschnitt zumindest teilweise durch die Befestigungsöffnung 7 ragt und in eine Befestigungsausnehmung 8 des Blendenelements 5, welche an der Rückseite 5b des Blendenelements 5 angeordnet ist, eingreift. Die Befestigungsausnehmung 8 hat ein zu dem Gewinde der Schraube 6 korrespondierend ausgebildetes Gegengewinde. Das Blendenelement 5 hat in einer ersten Richtung, welche parallel zu der Schraubachse orientiert ist, eine Dicke D und die Befestigungsausnehmung 8 hat in der ersten Richtung eine Tiefe H, wobei die Tiefe H geringer ist als die Dicke D. Die erste Richtung ist insbesondere parallel zu einer Lichtabstrahlrichtung, in welcher das Licht der Beleuchtungsvorrichtung durch die Abschlussscheibe hindurch abgestrahlt wird.

In dem gezeigten Ausführungsbeispiel weist die Abschlussscheibe 2 zwei Befestigungsöffnungen 7 und das Blendenelement 5 zwei, zu den Befestigungsöffnungen 7 korrespondierende, Befestigungsausnehmung 8 auf.

Durch das Anliegen des Schraubkopfs an der Innenseite 2a der Abschlussscheibe 2 und durch den Eingriff des Gewindeabschnitts der Schraube 6 in die Befestigungsausnehmung 8 ist die Position des Blendenelements 5 an der Außenseite 2b der Abschlussscheibe 2 in zumindest zwei Richtungen, welche parallel und orthogonal zu der Schraubachse der Schraube 6 orientiert sind, fixiert.

Wie in Fig. 1 erkennbar, hat die Außenseite 2a des intransparenten Bereichs 4 der Abschussscheibe 2 einen ersten Flächeninhalt und die Vorderseite 5a des Blendenelements 5 einen zweiten Flächeninhalt, wobei der erste Flächeninhalt größer als der zweite Flächeninhalt ist. Der intransparente Bereich 4 ist unterhalb des transparenten Bereichs 3 angeordnet. Der intransparente 4 und der transparente Bereich 3 sind einteilig ausgebildet. Der intransparente 4 und der transparente Bereich 3 sind als 2-Komponenten-Spritzgussbauteil ausgebildet.

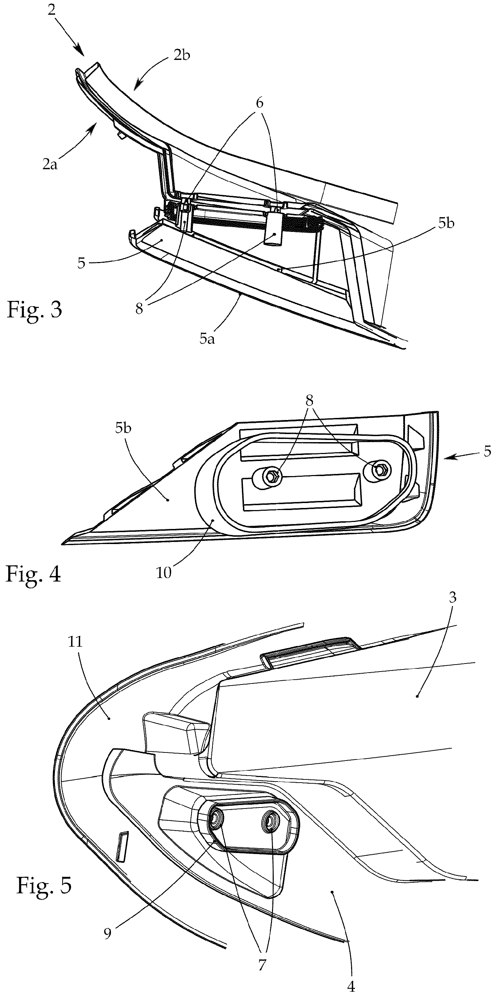

Fig. 3 zeigt eine Draufsicht auf das Blendenelement 5, wenn es an der Abschlussscheibe 2 befestigt ist.

Fig. 4 zeigt eine Detailansicht der Rückseite 5b des Blendenelements 5 und Fig. 5 zeigt eine Detailansicht der Außenseite 2a der Abschlussscheibe 2.

Fig. 5 zeigt eine Detailansicht bzw. einen Ausschnitt der Außenseite 2a der Abschlussscheibe 2, wobei in der gezeigten Fig. 5 das Blendenelement 5 an der Abschlussscheibe 2 nicht befestigt ist, um den Aufnahmebereich 9 deutlich zu zeigen.

Der intransparente Bereich 4 der Abschlussscheibe 2 hat an seiner Außenseite 2a einen Aufnahmebereich 9 (s. Fig. 5) und das Blendenelement 5 (s. Fig. 4) ein zu dem Aufnahmebereich 9 korrespondierendes Kontaktelement 10, welches im befestigten Zustand des Blendenelements 5 den Aufnahmebereich 9 kontaktiert. Der Aufnahmebereich 9 ist als Vertiefung oder Erhöhung, welche die Form einer geschlossenen Kurve aufweist, ausgebildet. Das Kontaktelement 10 hat eine zu dem Aufnahmebereich 9 korrespondierend ausgebildete Vertiefung oder Erhöhung, welche vorzugsweise die Form einer geschlossenen Kurve aufweist. Der Aufnahmebereich 9 verläuft um die Befestigungsöffnung 7 herum und das Kontaktelement 10 verläuft um die Befestigungsausnehmung 8 herum.

In dem gezeigten Ausführungsbeispiel weist die Abschlussscheibe 2 zwei Befestigungsöffnungen 7 und das Blendenelement 5 zwei Befestigungsausnehmungen 8 auf, wobei der Aufnahmebereich 9 um die zumindest zwei Befestigungsöffnungen 7 und das Kontaktelement 10 um die zumindest zwei Befestigungsausnehmungen 8 herum verläuft. Es kann auch nur eine Befestigungsöffnung 7 und eine Befestigungsausnehmung 8 oder drei oder mehr Befestigungsöffnungen 7 und Befestigungsausnehmungen 8 vorgesehen sein. Vorzugsweise ist die Anzahl der Befestigungsöffnungen 7 gleich der Anzahl an Befestigungsausnehmungen 8.

An der Außenseite 2a der Abschlussscheibe 2, zwischen der Abschlussscheibe 2 und dem Blendenelement 5 ist ein (nicht gezeigtes) erstes Dichtungselement angeordnet. Das erste Dichtungselement kann an dem Aufnahmebereich 9 und/oder an dem Kontaktelement 10 angeordnet sein. An der Innenseite 2b der Abschlussscheibe 2, zwischen der Abschlussscheibe 2 und dem Schraubkopf kann ein (nicht gezeigtes) zweites Dichtungselement angeordnet sein.

## Patentansprüche

1. Kraftfahrzeugscheinwerfer (1), umfassend:
- eine Beleuchtungsvorrichtung zur Erzeugung und Abstrahlung von Licht,
- ein Gehäuse mit einem Gehäusekörper (11), wobei in dem Gehäusekörper (11) die Beleuchtungsvorrichtung angeordnet ist,
- eine den Gehäusekörper (11) abschließende Abschlussscheibe (2), wobei die Abschlussscheibe (2) einen transparenten Bereich (3) und einen intransparenten Bereich (4) aufweist, wobei die Beleuchtungsvorrichtung in dem Gehäusekörper (11) dergestalt angeordnet ist, dass mittels der Beleuchtungsvorrichtung Licht durch den transparenten Bereich (3) der Abschlussscheibe (2) hindurch in einen Verkehrsraum abstrahlbar ist, wobei die Abschlussscheibe (2) eine dem Gehäusekörper (11) zugewandte Innenseite (2b) und eine dem Gehäusekörper (11) abgewandte Außenseite (2a) aufweist,
- ein Blendenelement (5), welches an dem intransparenten Bereich (4) der Abschlussscheibe (2) befestigt ist, wobei das Blendenelement (5) eine der Abschlussscheibe (2) zugewandte Rückseite (5b) und eine der Abschlussscheibe (2) abgewandte Vorderseite (5a) aufweist,
wobei das Blendenelement (5) an der Außenseite (2a) des intransparenten Bereichs (4) der Abschlussscheibe (2) angeordnet und an dieser mittels zumindest einer Schraube (6) befestigt ist, wobei die Abschlussscheibe (2) zur Befestigung des Blendenelements (5) zumindest eine Befestigungsöffnung (7) zur Aufnahme der Schraube (6) aufweist, wobei der Durchmesser der Befestigungsöffnung (7) größer als der Gewindedurchmesser der Schraube (5) ist, wobei die Schraube (5) einen Schraubkopf und einen Gewindeabschnitt aufweist, wobei im befestigten Zustand des Blendenelements (5) an der Abschlussscheibe (2) der Schraubkopf an der Innenseite (2b) der Abschlussscheibe (2) anliegt und der Gewindeabschnitt zumindest teilweise durch die Befestigungsöffnung (7) ragt und in eine Befestigungsausnehmung (8) des Blendenelements (5), welche an der Rückseite (5b) des Blendenelements (5) angeordnet ist, eingreift, wobei durch das Anliegen des Schraubkopfs an der Innenseite (2b) der Abschlussscheibe (2) und durch den Eingriff des Gewindeabschnitts der Schraube (6) in die Befestigungsausnehmung (8) die Position des Blendenelements (5) an der Außenseite (2a) der Abschlussscheibe (2) in zumindest zwei Richtungen, welche parallel und orthogonal zu der Schraubachse der Schraube (6) orientiert sind, fixiert ist, wobei der intransparente Bereich (4) der Abschlussscheibe (2) an seiner Außenseite (2a) einen Aufnahmebereich (9) aufweist und das Blendenelement (5) ein zu dem Aufnahmebereich (9) korrespondierendes Kontaktelement (10) aufweist, welches im befestigten Zustand des Blendenelements (5) den Aufnahmebereich (9) kontaktiert, wobei der Aufnahmebereich (9) als Vertiefung oder Erhöhung, welche die Form einer geschlossenen Kurve aufweist, ausgebildet ist.

2. Kraftfahrzeugscheinwerfer (1) nach Anspruch 1, wobei das Kontaktelement (10) als eine zu dem Aufnahmebereich (9) korrespondierend ausgebildete Vertiefung oder Erhöhung, welche vorzugsweise die Form einer geschlossenen Kurve aufweist, ausgebildet ist.

3. Kraftfahrzeugscheinwerfer (1) nach Anspruch 1 oder 2, wobei der Aufnahmebereich (9) um die Befestigungsöffnung (7) herum verläuft, wobei vorzugsweise das Kontaktelement (10) um die Befestigungsausnehmung (8) herum verläuft.

4. Kraftfahrzeugscheinwerfer (1) nach einem der Ansprüche 1 bis 3, wobei die Abschlussscheibe (2) zumindest zwei Befestigungsöffnungen (7) und das Blendenelement (5) zumindest zwei Befestigungsausnehmungen (8) aufweist, wobei vorzugsweise der Aufnahmebereich (9) um die zumindest zwei Befestigungsöffnungen (7) und das Kontaktelement (10) um die zumindest zwei Befestigungsausnehmungen (8) herum verläuft.

5. Kraftfahrzeugscheinwerfer (1) nach einem der Ansprüche 1 bis 4, wobei der Aufnahmebereich (9) und das Kontaktelement (10) rund oder oval ausgebildet sind.

6. Kraftfahrzeugscheinwerfer (1) nach einem der vorhergehenden Ansprüche, wobei die Befestigungsausnehmung (8) ein zu dem Gewinde der Schraube (6) korrespondierend ausgebildetes Gegengewinde aufweist.

7. Kraftfahrzeugscheinwerfer (1) nach einem der vorhergehenden Ansprüche, wobei das Blendenelement (5) in einer ersten Richtung, welche parallel zu der Schraubachse orientiert ist, eine Dicke D aufweist und die Befestigungsausnehmung (8) in der ersten Richtung eine Tiefe H aufweist, wobei die Tiefe H geringer ist als die Dicke D.

8. Kraftfahrzeugscheinwerfer (1) nach einem der vorhergehenden Ansprüche, wobei die Befestigungsöffnung (7) im Wesentlichen zylinderförmig ausgestaltet ist.

9. Kraftfahrzeugscheinwerfer (1) nach einem der vorhergehenden Ansprüche, wobei an der Außenseite (2a) der Abschlussscheibe (2), zwischen der Abschlussscheibe (2) und dem Blendenelement (5) ein erstes Dichtungselement angeordnet ist.

10. Kraftfahrzeugscheinwerfer (1) nach einem der Ansprüche 1 bis 9, wobei das erste Dichtungselement an dem Aufnahmebereich (9) und/oder an dem Kontaktelement (10) angeordnet ist.

11. Kraftfahrzeugscheinwerfer (1) nach einem der vorhergehenden Ansprüche, wobei an der Innenseite (2b) der Abschlussscheibe (2), zwischen der Abschlussscheibe (2) und dem Schraubkopf ein zweites Dichtungselement angeordnet ist.

12. Kraftfahrzeugscheinwerfer (1) nach einem der vorhergehenden Ansprüche, wobei die Außenseite (2a) des intransparenten Bereichs (4) der Abschussscheibe (2) einen ersten Flächeninhalt und die Vorderseite (5a) des Blendenelements (5) einen zweiten Flächeninhalt aufweist, wobei der erste Flächeninhalt größer oder gleich dem zweiten Flächeninhalt ist.

13. Kraftfahrzeugscheinwerfer (1) nach einem der vorhergehenden Ansprüche, wobei der intransparente Bereich (4) unterhalb des transparenten Bereichs (3) angeordnet ist, wobei vorzugsweise der intransparente (4) und der transparente Bereich (3) einteilig ausgebildet ist.

14. Kraftfahrzeugscheinwerfer (1) nach einem der vorhergehenden Ansprüche, wobei der intransparente (4) und der transparente Bereich (3) als 2-Komponenten-Spritzgussbauteil ausgebildet ist.

## Claims

1. Motor vehicle headlamp (1), comprising:
- a lighting device for generating and emitting light,
- a housing with a housing body (11), wherein the lighting device is arranged in the housing body (11),
- a cover plate (2) closing off the housing body (11), wherein the cover plate (2) has a transparent area (3) and an opaque area (4), wherein the lighting device is arranged in the housing body (11) in such a way that light can be emitted through the transparent area (3) of the end plate (2) into a traffic area, wherein the end plate (2) has an inner side (2b) facing the housing body (11) and an outer side (2a) facing away from the housing body (11),
- a cover element (5) which is attached to the non-transparent area (4) of the end plate (2), wherein the cover element (5) has a rear side (5b) facing the end plate (2) and a front side (5a) facing away from the end plate (2),
wherein
the cover element (5) is arranged on the outer side (2a) of the opaque area (4) of the end plate (2) and is fastened thereto by means of at least one screw (6), wherein the end plate (2) has at least one fastening opening (7) for receiving the screw (6) for fastening the cover element (5), the diameter of the fastening opening (7) being greater than the thread diameter of the screw (5), wherein the screw (5) has a screw head and a threaded section, wherein, when the cover element (5) is fastened to the end plate (2), the screw head rests against the inner side (2b) of the end plate (2) and the threaded section protrudes at least partially through the fastening opening (7) and engages in a fastening recess (8) of the cover element (5), which is arranged on the rear side (5b) of the cover element (5), whereby the position of the cover element (5) on the outer side (2a) of the end plate (2) is fixed in at least two directions, which are oriented parallel and orthogonal to the screw axis of the screw (6), wherein the opaque area (4) of the end plate (2) has a receiving area (9) on its outer side (2a) and the cover element (5) has a contact element (10) corresponding to the receiving area (9), which contacts the receiving area (9) when the cover element (5) is in the fixed state, wherein the receiving area (9) is designed as a recess or elevation having the shape of a closed curve.

2. Motor vehicle headlamp (1) according to claim 1, wherein the contact element (10) is designed as a recess or elevation corresponding to the receiving area (9), which preferably has the shape of a closed curve.

3. Motor vehicle headlamp (1) according to claim 1 or 2, wherein the receiving area (9) extends around the fastening opening (7), wherein the contact element (10) preferably extends around the fastening recess (8).

4. Motor vehicle headlamp (1) according to one of claims 1 to 3, wherein the cover lens (2) has at least two mounting openings (7) and the shading element (5) has at least two mounting recesses (8), wherein preferably the receiving area (9) around the at least two mounting openings (7) and the contact element (10) extends around the at least two fastening recesses (8).

5. Motor vehicle headlamp (1) according to one of claims 1 to 4, wherein the receiving area (9) and the contact element (10) are round or oval in shape.

6. Motor vehicle headlamp (1) according to one of the preceding claims, wherein the fastening recess (8) has a counter thread formed to correspond to the thread of the screw (6).

7. Motor vehicle headlamp (1) according to one of the preceding claims, wherein the baffle element (5) has a thickness D in a first direction which is oriented parallel to the screw axis, and the fastening recess (8) has a depth H in the first direction, wherein the depth H is less than the thickness D.

8. Motor vehicle headlamp (1) according to one of the preceding claims, wherein the fastening opening (7) is designed to be essentially cylindrical.

9. Motor vehicle headlamp (1) according to one of the preceding claims, wherein a first sealing element is arranged on the outside (2a) of the cover lens (2), between the cover lens (2) and the baffle element (5).

10. Motor vehicle headlamp (1) according to one of claims 1 to 9, wherein the first sealing element is arranged on the receiving area (9) and/or on the contact element (10).

11. Motor vehicle headlamp (1) according to one of the preceding claims, wherein a second sealing element is arranged on the inside (2b) of the cover lens (2), between the cover lens (2) and the screw head.

12. Motor vehicle headlamp (1) according to one of the preceding claims, wherein the outer side (2a) of the non-transparent area (4) of the cover lens (2) has a first surface area and the front side (5a) of the baffle element (5) has a second surface area, wherein the first surface area is greater than or equal to the second surface area.

13. Motor vehicle headlamp (1) according to one of the preceding claims, wherein the opaque area (4) is arranged below the transparent area (3), wherein preferably the opaque (4) and transparent areas (3) are formed in one piece.

14. Motor vehicle headlamp (1) according to one of the preceding claims, wherein the opaque area (4) and the transparent area (3) are formed as a two-component injection-molded component.

## Revendications

1. Projecteur de véhicule automobile (1), comprenant :
- un dispositif d'éclairage pour produire et émettre de la lumière,
- un boîtier avec un corps de boîtier (11), le dispositif d'éclairage étant disposé dans le corps de boîtier (11),
- une vitre de fermeture (2) fermant le corps de boîtier (11), la vitre de fermeture (2) présentant une zone transparente (3) et une zone non transparente (4), le dispositif d'éclairage étant disposé dans le corps de boîtier (11) de telle sorte que la lumière puisse être émise à travers la zone transparente (3) de la vitre de fermeture (2) dans un espace de circulation, la vitre de fermeture (2) présentant une face intérieure (2b) tournée vers le corps de boîtier (11) et une face extérieure (2a) détournée du corps de boîtier (11),
- un élément d'occultation (5) qui est fixé à la zone non transparente (4) de la vitre de fermeture (2), l'élément d'occultation (5) présentant une face arrière (5b) tournée vers la vitre de fermeture (2) et une face avant (5a) détournée de la vitre de fermeture (2),
dans laquelle
l'élément d'occultation (5) est disposé sur la face extérieure (2a) de la zone opaque (4) de la vitre d'extrémité (2) et est fixé à celle-ci au moyen d'au moins une vis (6), la vitre d'extrémité (2) présentant, pour la fixation de l'élément d'occultation (5), la tête de vis étant en appui contre la face interne (2b) de la vitre de fermeture (2) lorsque l'élément d'occultation (5) est fixé à la vitre de fermeture (2) et la partie filetée étant au moins partiellement traversée par l'ouverture de fixation (7) (5) à la rondelle d'obturation (2), la tête de vis repose contre la face intérieure (2b) de la rondelle d'obturation (2) et la partie filetée dépasse au moins partiellement à travers l'ouverture de fixation (7) et s'engage dans un évidement de fixation (8) de l'élément d'obturation (5), qui est disposé sur la face arrière (5b) de l'élément d'obturation (5), la position de l'élément d'obturation (5) est fixée sur la face extérieure (2a) de la rondelle d'obturation (2) dans au moins deux directions qui sont orientées parallèlement et orthogonalement à l'axe de vissage de la vis (6), la zone opaque (4) de la rondelle d'obturation (2) présentant sur sa face extérieure (2a) une zone de réception (9) et l'élément d'obturation (5) présente un élément de contact (10) correspondant à la zone de réception (9), qui entre en contact avec la zone de réception (9) lorsque l'élément d'obturation (5) est fixé, la zone de réception (9) étant conçue comme un renfoncement ou une surélévation présentant la forme d'une courbe fermée.

2. Projecteur de véhicule automobile (1) selon la revendication 1, l'élément de contact (10) étant conçu comme un renfoncement ou une surélévation correspondant à la zone de réception (9), qui présente de préférence la forme d'une courbe fermée.

3. Projecteur de véhicule automobile (1) selon la revendication 1 ou 2, la zone de réception (9) s'étendant autour de l'ouverture de fixation (7), l'élément de contact (10) s'étendant de préférence autour de l'évidement de fixation (8).

4. Projecteur de véhicule automobile (1) selon l'une des revendications 1 à 3, dans lequel la lentille (2) comporte au moins deux ouvertures de fixation (7) et l'élément d'occultation (5) comporte au moins deux évidements de fixation (8), la zone de réception (9) s'étendant de préférence autour des au moins deux ouvertures de fixation (7) et l'élément de contact (10) s'étend autour des au moins deux évidements de fixation (8).

5. Projecteur de véhicule automobile (1) selon l'une des revendications 1 à 4, la zone de réception (9) et l'élément de contact (10) étant de forme ronde ou ovale.

6. Projecteur de véhicule automobile (1) selon l'une des revendications précédentes, l'évidement de fixation (8) présentant un contre-filetage correspondant au filetage de la vis (6).

7. Projecteur de véhicule automobile (1) selon l'une des revendications précédentes, dans lequel l'élément d'occultation (5) présente une épaisseur D dans une première direction orientée parallèlement à l'axe de la vis et l'évidement de fixation (8) présente une profondeur H dans la première direction, la profondeur H étant inférieure à l'épaisseur D.

8. Projecteur de véhicule automobile (1) selon l'une des revendications précédentes, l'ouverture de fixation (7) étant essentiellement de forme cylindrique.

9. Projecteur de véhicule automobile (1) selon l'une des revendications précédentes, dans lequel un premier élément d'étanchéité est disposé sur la face extérieure (2a) de la vitre de protection (2), entre la vitre de protection (2) et l'élément d'occultation (5).

10. Projecteur de véhicule automobile (1) selon l'une des revendications 1 à 9, dans lequel le premier élément d'étanchéité est disposé au niveau de la zone de réception (9) et/ou au niveau de l'élément de contact (10).

11. Projecteur de véhicule automobile (1) selon l'une des revendications précédentes, dans lequel un deuxième élément d'étanchéité est disposé sur la face intérieure (2b) de la vitre de fermeture (2), entre la vitre de fermeture (2) et la tête de vis.

12. Projecteur de véhicule automobile (1) selon l'une des revendications précédentes, la face extérieure (2a) de la zone opaque (4) de la lentille (2) présentant une première surface et la face avant (5a) de l'élément de cache (5) présentant une deuxième surface, la première surface étant supérieure ou égale à la deuxième surface.

13. Projecteur de véhicule automobile (1) selon l'une des revendications précédentes, dans lequel la zone opaque (4) est disposée sous la zone transparente (3), la zone opaque (4) et la zone transparente (3) étant de préférence réalisées d'un seul tenant.

14. Projecteur de véhicule automobile (1) selon l'une des revendications précédentes, la zone opaque (4) et la zone transparente (3) étant réalisées sous la forme d'un composant moulé par injection à deux composants.
